# EUROPEAN PATENT APPLICATION

(11) **EP 1 826 963 A2**
(43) Date of publication of application: **29.08.2007**
(21) Application number: 07004150.4
(22) Date of filing: 28.02.2007
(51) Int. Cl.: H04L 12/56

(54) **Mobile communication terminal and route selection method**

(30) Priority: 28.02.2006 JP 2006052465
(71) Applicant: NTT DoCoMo INC., Chiyoda-ku Tokyo 100-6150 (JP)
(72) Inventor: Morita, Masanori, IP Dpt, NTT DoCOMo, Inc., Chiyoda-ku, Tokyo 100-6150 (JP); Suzuki, Toshihiro, IP Dpt, NTT DoCOMo, Inc., Chiyoda-ku, Tokyo 100-6150 (JP); Kobayashi, Motonari, IP Dpt, NTT DoCOMo, Inc., Chiyoda-ku, Tokyo 100-6150 (JP); Khan, Ashiq, IP Dpt, NTT DoCOMo, Inc., Chiyoda-ku, Tokyo 100-6150 (JP)
(74) Representative: HOFFMANN EITLE

(57) **Abstract**

A mobile communication terminal communicates with a base station of an infrastructure network via any one of a single-hop route, and a multi-hop route using other terminals. The mobile communication includes an application processor and an access route selector. The application processor is configured to process an application involving communications with the base station. The access route selector is configured to select an access route out of the single-hop mute and the multi-hop route, in accordance with information on the application.

## Description

### CROSS REFERENCE TO RELATED APPLICATION AND INCORPORATION BY REFERENCE

This application is based upon and claims the benefit of priority from prior Japanese Patent Application P2006-52465 filed on February 28, 2006; the entire contents of which are incorporated by reference herein.

### BACKGROUND OF THE INVENTION

### 1 Field of the Invention

The present invention relates to a mobile communication terminal and a route selection method used in a radio communication network which utilizes an infrastructure network and an ad-hoc network in combination.

### 2. Description of the Related Art

A mobile ad-hoc network (MANET) has been known which is formed of a plurality of autonomous distributed mobile communication terminals each having a radio communication function and a routing function (for example, refer to Macker, Joseph, and Scott Corson. "Mobile Ad-hoc Networks (manet)." IETF Working Group, URL: http://www.ietf.org/html.charters/manet-charter-html). In addition, a multi-hop cellular network on which each mobile communication terminal connects to a base station of an infrastructure network with multi-hop relay via mobile communication terminals has been also proposed

In the multi hop cellular network, each mobile communication terminal can access the base station via any one of a single-hop route and a multi-hop route. Accordingly, it is made possible to avoid communication congestion at a base station located in a high node-density area where a large volume of communications simultaneously occurs.

Furthermore, a method has been proposed in which, at a start of communications, each mobile communication terminal constantly accesses a base station nearest to the terminal through a single-hop route, and in which then the terminal switches the single-hop route to a multi-hop route after searching out a route by using a routing protocol of the MANET, when the terminal cannot make a communication through the single-hop route (for example, refer to Yamada, Masato et al., "Cooperative Networking Using Infra-multi-hop Architecture in Heterogeneous Mobile Networks." Technical Report of IEICE, MoMuC2005-66, p.p.47-52, November 2005).

However, when each of the mobile communication terminals starts communication by invariably accessing a base station nearest to the terminal through a single-hop route, communication congestion occurs in a first access route, and a processing load further increases therein due to processing of communication failures resulting from the congestion. Moreover, because an access route is selected in accordance with the preference order fixed regardless of what application to be executed, characteristics of traffic quality required for a service do not match characteristics of quality of the access route, which is any one of the single-hop route and the multi-hop route. As a result, communications is inefficient, and a problem that a communication completion rate is low is then caused.

### SUMMARY OF THE INVENTION

In view of the foregoing problems, an object of the present invention is to provide a mobile communication terminal and a route selection method that make it possible to avoid communication congestion, which would occur due to a preference order fixed for access routes, at a base station, and to select the most appropriate access route in consideration of an application.

In order to achieve the abovementioned object, a first aspect of the present invention is a mobile communication terminal which communicates with a base station of an infrastructure network though any one of a single-hop route and a multi-hop route which uses other terminals. The mobile communication terminal includes an application processor configured to process an application involving a communication with a base station, and an access route selector configured to preferentially select an access route out of the single-hop route and the multi-hop route, in accordance with information on the application.

Here, an "infrastructure network" is defined as a static network such as a cable network. Examples thereof include an Internet network, a mobile communication network, a wired local area network (LAN), and a combination of any two or more of these networks. Accordingly, examples of a "base station" include an access point of a wireless LAN, and the like in addition to a mobile phone network base station and a PHS base station.

Incidentally, a "single-hop route" is defined as a route through which a mobile communication terminal directly communicates with a base station, whereas a "multi-hop route" is defined as a route through which a mobile communication terminal (a terminal of a user making a communication) communicates with a base station via at least one of other terminals.

In the first aspect, the access route selector may preferentially select the single-hop route when a service provided by the application has a service attribute requiring real-time processing, and the access route selector may preferentially selects the multi-hop route when a service provided by the application has a service attribute not requiring real-time defined as a service for which

Here, a "service requiring real-time processing" is defined as a service for which simultaneity (immediacy) between two sites where communications occur therebetween is strictly required. In contrast, a "service not requiring real-time processing" is defined as a service for which simultaneity (immediacy) between two sites where communications occur therebetween is not necessarily required.

In the first aspect, the access route selector may select an access route out of the single-hop route and the multi-hop route, in accordance with an application type indicating a type of the application.

In the first aspect, the access route selector may select a combination of the access route and a radio system of the access route.

A second aspect of the present invention is a route selection method kr a mobile communication terminal which communicates with a base station of an infrastructure network via any one of a single-hop route, and a multi-bop route using other terminals. The method includes the steps ol; processing an application involving communications with the base station, and selecting an access mute out of the single-hop route and the multi-hop route, in accordance with information on the application.

According to the present invention, it is made possible to provide a mobile communication terminal and a route selection method with which communication congestion is avoided at a base station, the congestion stemming from a preference order fixed fur access routes. With the terminal and the method, the most appropriate access mute can be selected in consideration of applications.

### BRIEF DESCRIPTION OF THE DRAWINGS

FIG. 1 is a schematic view of an arrangement example of a radio communication system according to an embodiment of the present invention.
FIG. 2 is a block diagram of a hardware an-angement example of a mobile communication terminal according to the embodiment of the present invention.
FIG. 3 is a Mock diagram of a functional arrangement example of the mobile communication terminal according to the embodiment of the present invention.
FIG. 4A is a diagram showing an access route preference order pattern table held by the mobile communication terminal according to the embodiment of the present invention, and FIG 4B is a diagram showing a correspondence table of radio communication interfaces with the access routes, which is held by the mobile communication terminal according to the embodiment of the present invention.
FIG. 5 is a flowchart showing a procedure example of a route selection method according to the present invention.
FIG. 6A is a sequence diagram showing operations of the mobile communication terminal when communicating through an access route having the highest preference order at the time of processing a real-time-based service, and FIG. 6B is a sequence diagram showing operations of the mobile communication terminal when not capable of communicating through the access route having the highest preference order at the time of processing a real-time based service.
FIG. 7A is a sequence diagram showing operations of the mobile communication terminal when communicating through an access route having the highest preference order at the time of processing a non-real-time-based service, and FIG. 7B is a sequence diagram showing operations of the mobile communication terminal when not capable of communicating through the access route having the highest preference order at the time of processing a non-real-time-based service.
FIG. 8 is a schematic view of a arrangement example of a radio communication system according to a modification of the embodiment of the present invention.
FIG. 9 is a diagram showing a table of access route preference order patterns according to another embodiment of the present invention.

### DETAILED DESCRIPTION OF THE INVENTION

With reference to the drawings, embodiments of the present invention will be described below, In descriptions on the drawings of the following embodiments, identical or similar constituents are designated by identical or similar reference numerals.

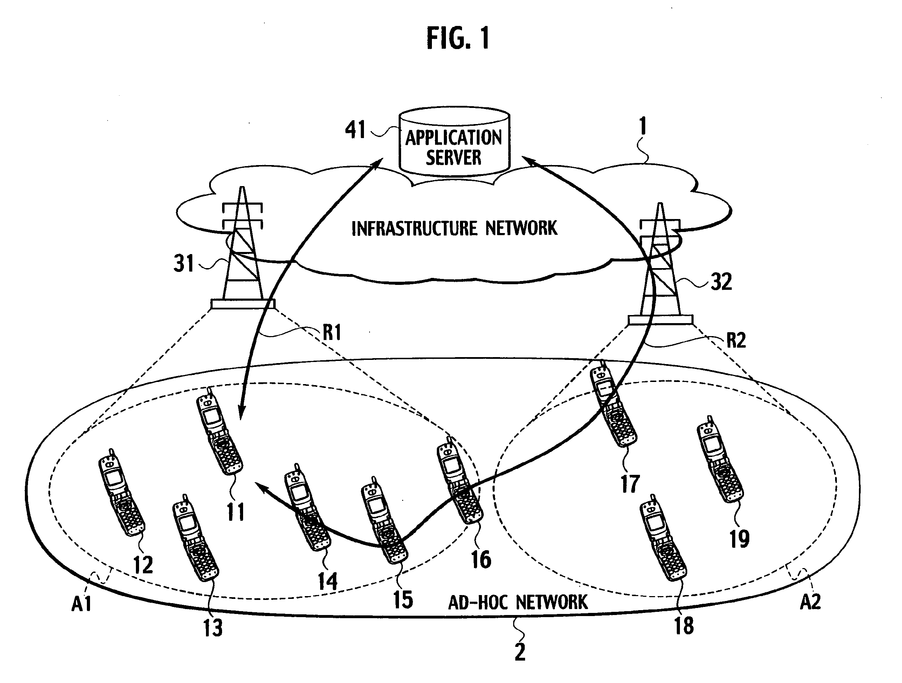

As shown in FIG. 1, radio communication system according to an embodiment of the present invention includes, an infrastructure network 1 such as a mobile communication network, a plurality of mobile communication terminals 11 to 19, base stations (access points) 31 and 32 of the infrastructure network 1, and an application server 41. The application server 41 communicates with each of the plurality of mobile communication terminals 11 to 19 through the infrastructure network 1.

In an example in FIG. 1, a mobile phone terminal is exemplified as each of the plurality of mobile communication terminals 11 to 19. Meanwhile, each of the mobile communication terminals 11 to 19 may be a laptop PC, a personal digital assistance (PDA) or the like provided with a radio communication function.

When mobile phone terminals are used as the plurality of mobile communication terminals 11 to 19, a radio access network (RAN), a core network (CN) and the like, for example, are included. The radio access network controls and terminates a radio technology. The core network performs a position control, a call control and a service control. Alternatively, the infrastructure network 1 may be configured as an internet-protocol (IP)-based packet network.

Out of the plurality of mobile communication terminals 11 to 19, the first to sixth mobile communication terminals 11 to 16 belong to a cover area A1 of the first base station 31. The seventh to ninth mobile communication terminals 17 to 19 belong to a cover area A2 of the second base station 32.

In the cover area A1 of the first base station 31, it is supposed that a large volume of communications concurrently occur due to a high node density in the cover area A1. Consequently, congestion of communications tends to occur due to a large traffic volume at the first base station 31.

The first to ninth mobile communication terminals 11 to 19 forms an ad-hoc network 2. The thus formed ad-hoc network is a dynamic network where an area in which communications is possible is determined in accordance with positional relationship among the mobile communication terminals 11 to 19.

Because the mobile communication terminals 11 to 19 have an arrangement similar to one another, the first mobile communication terminal 11 will be described below in detail. Detailed descriptions on the remaining mobile communication terminals 12 to 19 will be omitted.

The mobile communication terminal J communicates with the application server 41. via the fist base station 31 through a single-hop route R1, or via the second base station 32 through a multi-hop route R2 which uses the ad-hoc network 2. Note that a radio system of the single-hop route R1 and a radio system of the multi-hop mute R2 are different from each other.

In the multi-hop route R2, a. communication rate momently varies, and it is more difficult to constantly secure quality characteristics than in the single-hop route R1. For this reason, the first mobile communication terminal 11 is configured to be able to maintain service quality, as well as to avoid congestion of communications at the first base station 31 in the following manner. Specifically, the first mobile communication terminal 11 is caused to select an access .route out of the single-hop route R1 and the multi-hop route R2, in accordance with an attribute of a service provided by the application.

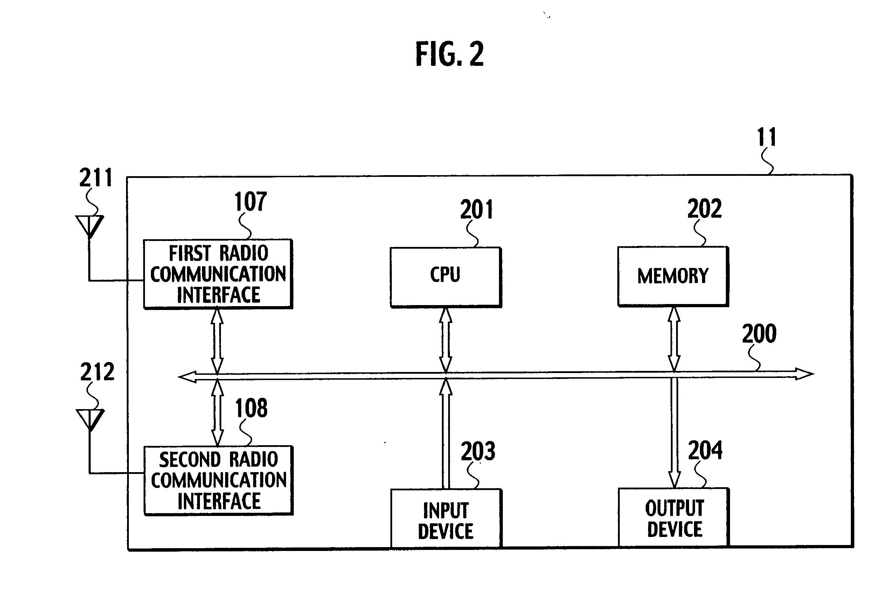

As shown in FIG. 2, the mobile communication terminal 11 includes a first antenna 211, a second antenna 212, a first radio communication interface 107, a second radio communication interface 108, a bus 200, a central processing unit (CPU) 201, a memory 202, an input device 203, and an output device 204. The first radio communication interface 107, the second radio communication interface 108, the central processing unit (CPU) 201, the memory 202, the input device 203 and the output device 204 mutually exchange data via the bus 200.

The first radio communication interface 107 is used for directly communicating with the infrastructure network 1. The first radio communication interface 107 has an arrangement in conformity with, for example, the W-CDMA system, the GSM (Global System for Mobile Communications) system or the like.

The second radio communication interface 108 is capable of communicating via the ad-hoc network 2. The second radio communication interface 108 has an arrangement in conformity with a wireless LAN system having an ad-hoc mode such as IEEE802.11a, IEEE802.11b or TEEE802.11g.

A microphone, a keypad, an image pickup device, a scroll button or the like can be used as the input device 203, for instance. A speakerphone, a liquid crystal display device (LCD) or the like can be used as the output device 204, far instance. The memory 202 is composed of a ROM and a RAM, or of a nonvolatile memory, and stores a control program (a firmware) executed by the CPU 201. Concurrently, the memory 202 is used as a work area used when the CPU 201 is executing the control program.

The CPU 201 substantiates each of a variety of functions by executing the control program stored in the memory 202.

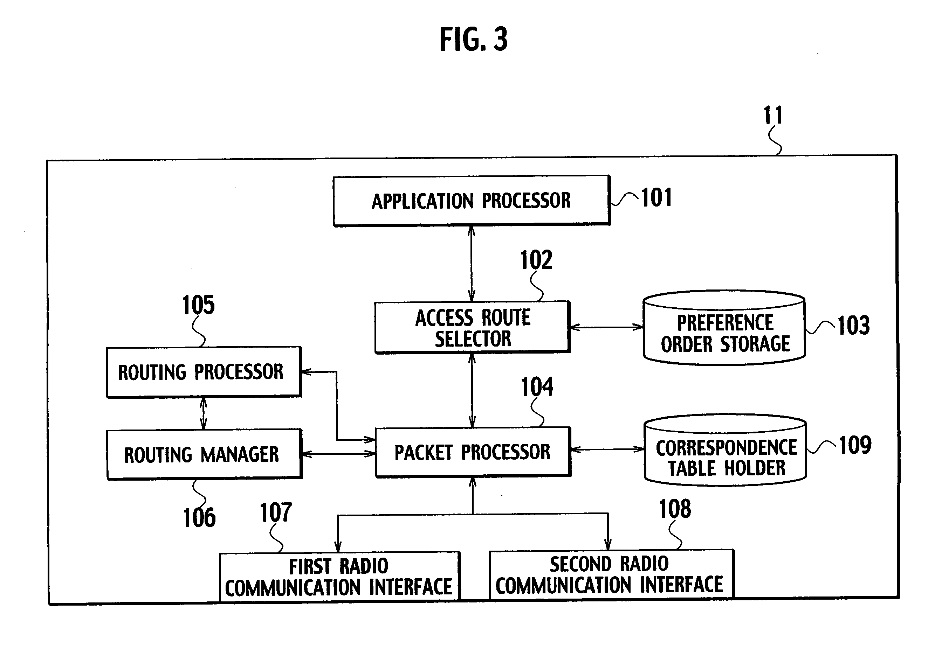

A functional arrangement of the mobile communication terminal 11 is shown in FIG. 3. The mobile communication terminal 11 includes an application processor 101, an access route selector 102, a preference order storage 103, a packet processor 104, a routing processor 105, a routing manager 106 and a correspondence table holder 109.

The CPU 201 in FIG 2 executes each of functions of the application processor 101, the access route selector 102, the packet processor 104, the routing processor 105 and the routing manager 106. The preference order storage 103 and the correspondence table holder 109 are arranged in the memory 202 in FIG. 2.

The application processor 101 processes applications involving communication with the base stations 31 and 32. Here, an "application involving communication with a base station" is intended to be mainly defined as an application of a terminal-initiative type where the terminal starts accessing the network. Examples of the application involving a communication with a base station include video/voice phone call transmission, image/voice delivery, Web access, and e-mail.

The access route selector 102 selects an access route out of the single-hop route R1 and the multi-hop route R2, in accordance with a service attribute of the application. That is, the single-hop route R1 is preferentially selected in a case of a service requiring real-time processing (which will be referred to as "a real-time based service" hereinafter). The multi-hop route R2 is preferentially selected in the case of a service not requiring real-time processing (hereinafter referred to as "a non real-time based service").

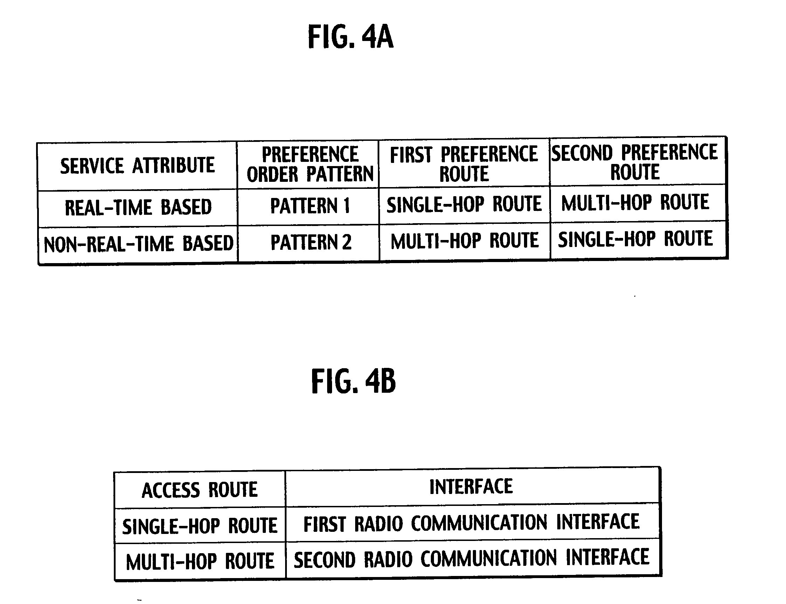

As shown in FIG. 4A, the preference order storage 103 stores the service attributes and preference order patterns therein in such a manner that each of the preference order patterns corresponds to a relevant one of the service attributes. The preference order patterns include a "first preference route" and a "second preference route". The first preference route has the highest preference order. The second preference route has the second highest preference order next to that of the first preference route.

In an example of FIG. 4A, a preference order pattern 1 corresponds to a real-time based service attribute. A preference order pattern 2 corresponds to a non-real-time-based service attribute.

The "preference order pattern 1" has the single-hop route R1 as the "first preference route", and has the multi-hop route R2 as the "second preference route". The "preference order pattern 2" has the multi-hop route R2 as the "first preference route", and has the single-hop route R1 as the "second preference route"

Accordingly, the access route selector 102 determines a service attribute of an application processed by the application processor 101, and then refers tu the preference order storage 103, Thereby a preference order pattern corresponding to the service attribute is selected.

For example, voice communication is equivalent to an application of which service attribute is real-time based. E-mail is equivalent to an application of which service attribute is non-real-time based.

In the multi-hop route R2, the routing processor 105 substantiates MANET routing by processing a routing protocol such as the DSR (Dynamic Source Routing) protocol, or the AODV (Ad-hoc On-demand Distance Vector routing) protocol (with respect to the AODV protocol, refer to IETF RFC 3561 "Ad-hoc On-demand Distance Vector (AODV) Routing" and the like).

The routing manager 106 manages routing information of a network. Specifically, while managing routing information in the ad-hoc network 2, the routing manager 106 manages information on availability of communication with the base stations 31 and 32. In each of the abovementioned AOVD protocol and the like, the routing manager 106 manages a routing table generated by the routing processor 105.

The packet processor 104 acquires the routing information managed by the routing ' manager 106 in accordance with a route indicated by any one of the preference order patterns, and confirms availability of the route to the application server 41. If the route is available, the packet processor 104 generates a packet for transmission.

As shown in FIG 4B, the correspondence table holder 109 holds a correspondence table of the access routes with the radio communication interfaces. In an example of FIG. 4B, the first radio communication interlace 107 corresponds to the single-hop route R1. The second radio communication interface 108 corresponds to the mutti-hop route R2.

Consequently, by referring to the correspondence table 109, the packet processor 104 transmits and receives the packet to and from the application server 41 by use of a radio communication interface corresponding to an access route selected by the access route selector 102.

The first radio communication interface 107 is configured in conformity with the radio system of the single-hop route R1. The first radio communication interface 107 transmits and receives packets in the single-hop route R1.

The second radio communication interface 108 is configured in conformity with the radio system of the multi-hop route R2. The second radio communication interface 108 transmits and receives packets in the multi-hop route R2.

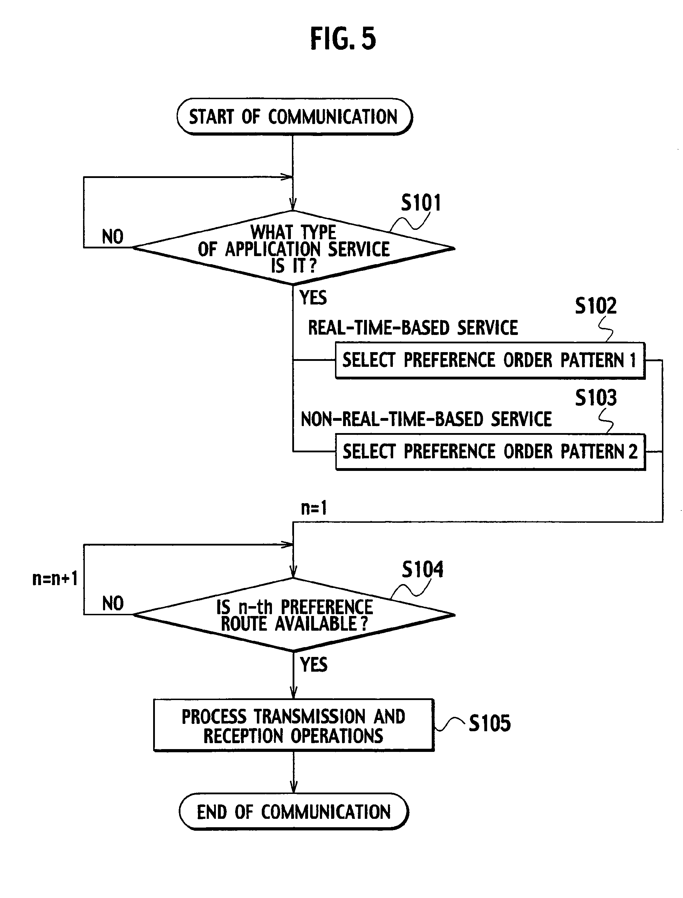

Next, with reference to a flowchart in FIG. 5, a route selection method according to the embodiment of the present invention will be described.

In step S101, when the application processor 101 attempts to utilize a service by processing an application, the access route selector 102 makes a determination on a service attribute of the application. When the service attribute of the application is determined to be real-time based, the flow proceeds to step S102. When the service attribute of the application is determined to be non-real-time-based, the flow proceeds to step S103.

In step S102, the access route selector 102 acquires, from the preference order storage 103, a preference order pattern for an access route set corresponding to a real-time-based service. As a result, the preference order pattern 1 is selected in the example of FIG. 4A Hence, the single-hop route R1 is selected as the first preference route.

In step S103, the access route selector 102 acquires, from the preference order storage 103, a preference order pattern for an access route corresponding to a non-real-time-based service. As a result, the preference order pattern 2 is selected in the example of FIG. 4A Accordingly, the multi-hop route R2 is selected as the first preference route.

In step S104, the packet processor 104 acquires the routing information managed by the routing manager 106 in accordance with a route indicated by any one of the preference order patterns, and then determines availability of the route to the application server 41. When the route to the application server 41 is determined to be available, the flow proceeds to step S105. On the other hand, when the route to the application server 41 is determined to be unavailable, an access route (the second preference route) with the next highest precedence order is selected. Thereafter, availability of this route is determined again.

In step S105, packets are transmitted and received by using an interface (the first radio communication interface 107 or the second radio communication interface 108) corresponding to an access route determined to be available in step S104. That is, the transmission and reception of packets are executed by use of the first radio communication interface 107 when the access route is the single-hop route R1, whereas the transmission and reception of packets are executed by use of the second radio communication interface 108 when the access route is the multi-hop route R2.

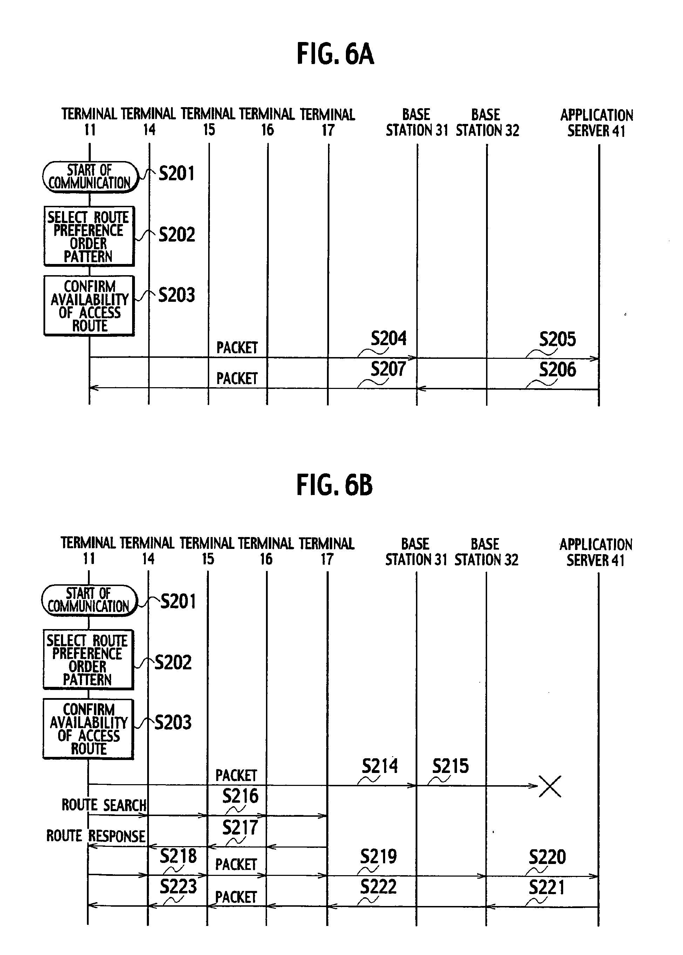

Next, with reference to sequence diagrams in FIGs. 6A and 6B, descriptions will be provided for procedures for communications between the first mobile communication terminal 11 and the application server 41 at the time when a real-time-based service is used.

First, the communication procedure using the first preference route (which is the single-hop route R1 here) will be described with reference to the sequence diagram in FIG. 6A.

In step S201, the communications starts by executing the application.

In step S202, the access route selector 102 selects the route preference order pattern 1 from the preference order storage 103. Consequently the single-lwp route R1 is selected as the first preference mute.

In step S203, the packet processor 104 confirms availability of the single-hop route R1. Furthermore, the packet processor 104 starts transmission and reception operations of packets with reference to the correspondence table holder 109, the operations using the first radio communication interface 107

In step S204, the packet processor 104 and the first radio communication interface 107 transmit a packet to the first base station 31.

In step S205, the first base station 31 transmits the packet to the application server 41 via the infrastructure network 1.

In step S206, the application server 41 transmits a packet to the first base station 31 via the infrastructure network 1.

In step S207, the first base station 31 transmits the packet to the first mobile communication terminal 11.

Next, With reference to the sequence diagram of FIG. 6B, descriptions will be provided for the communication procedure when a connection is made disabled when communications using the fist preference route (which is the single-hop route R1 here) starts at the time of using a real-time-based service. However, descriptions on part of this procedure identical to that of the procedure in FIG. 6A will be omitted.

In step S214, the packet processor 104 and the first radio communication interface 107 transmit a packet to the first base station 31.

In step S215, it is supposed that a connection is made disabled in transmitting the packet from the first base station 31 to the application server 41.

In step S216, upon detection of the disabled connection, the packet processor 104, for example, broadcasts a route search (a route request) packet to other terminals. As a result, the route search (the route request) packet is transmitted in the order of the first mobile communication terminal 11, the fourth mobile communication terminal 14, the fifth mobile communication terminal 15, the sixth mobile communication terminal 16 and the seventh mobile communication terminal 17.

In step S217, the seventh mobile communication terminal 17 returns a route response packet to the first mobile communication terminal 11, for example, by unicasting the route response packet. In this manner, a series of routing processing is executed.

In steps S218 and S219, the packet processor 104 and the second radio communication interface 108 transmit a packet to the second base station 32 via the multi-hop route R2, that is, via the fourth to seventh mobile communication terminals 14 to 17.

In step S220, the second base station 32 transmits the packet to the application server 41 via the infrastructure network 1.

In step S221, the application server 41 transmits a packet to the second base station 32 via the infrastructure network 1.

In steps S222 and S223, the second base station 32 transmits the packet to the first mobile communication terminal 11 via the multi-hop route R2, that is, via the fourth to seventh mobile communication terminals 14 to 17.

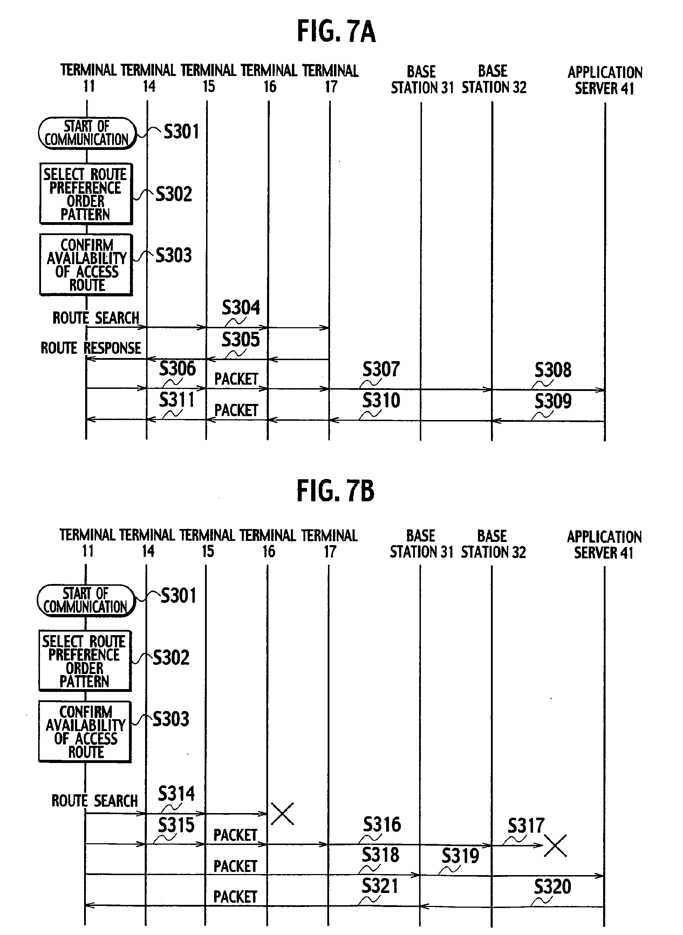

Next, with reference to sequence diagrams in FIGs. 7A and 7B, descriptions will be provided for procedures for communications between the first mobile communication terminal 11 and the application server 41 at the time of using a non-real time-based service.

First, the communication procedure using the first preference mute (which is the multi-hop route R2 here) will be described with reference to the sequence diagram in FIG. 7A.

In step S301, the communications starts by executing the application

In step S302, the access route selector 102 selects the route preference order pattern 2 from the preference order storage 103. Consequently, the multi-hop route R2 is selected as the first preference route.

In step S303, the packet processor 104 confirms availability of the multi-hop route R2 between the first mobile communication terminal 11 and the application server 41. Furthermore, the packet processor 104 starts transmitting a packet with reference to the correspondence table holder 109, the transmission operation using the second radio communication interface 108,

In step S304, the packet processor 104 and the second radio communication interface 108, for example, broadcast a route search (a mute request) packet to other terminals. As a result, the mute search (the route request) packet is transmitted in the order of the first mobile communication terminal 11, the fourth mobile communication terminal 14, the fifth mobile communication terminal 15, the sixth mobile communication terminal 16 and the seventh mobile communication terminal 17.

in step S305, the seventh mobile communication terminal 17 returns a route response packet to the mobile communication terminal 11, for example, by unicasting the route response packet. In this manner, a series of routing processing is executed.

In steps S306 and S307, the packet processor 104 and the second radio communication interface 108 transmit a packet to the second base station 32 via the multi-hop route R2, that is, via the fourth to seventh mobile communication terminals 14 to 17

In step S308, the second base station 32 transmits the packet to the application server 41 via the infrastructure network 1.

In step S309, the application server 41 transmits a packet to the second base station 32 via the in&astructure network 1.

In steps S310 and S311, the second base station 32 transmits the packet to the first mobile communication terminal 11 via the multi-hop route R2, that is, via the fourth to seventh mobile communication terminals 14 to 17.

Next, with reference to the sequence diagram of FIG 7B, descriptions will be provided for the communication procedure when a connection is made disabled when communications using the first preference mute (which is the multi-hop route R2 here) starts at the time of using a non-real-time-based service. However, descriptions on part of this procedure identical to that of the procedure in FIG. 7A will be omitted.

In step S314, the packet processor 104 and the second radio communication interlace 108 broadcast a route search (a route request) packet to other terminals. It is supposed that this results in unavailability of packet transmission from the sixth mobile communication terminal 16 to the seventh mobile communication terminal 17 due to the route search (the route request) packet transmitted in the order of the first mobile communication terminal 11, the fourth mobile communication terminal 14, the fifth mobile communication terminal 15 and the sixth mobile communication terminal 16. As a result, the sixth mobile communication terminal 16 is selected as a terminal which communicates with the second base station 32..

In steps S315 and S316, the packet processor 104 and the second radio communication interface 108 transmit a packet to the second base station 32 via the multi-hop route R2, that is, via the fourth to seventh mobile communication terminals 14 to 17.

In step S317, it is supposed that a connection is made disabled at the time of transmitting the packet from the second base station 32 to the application server 41.

In step S318, the packet processor 104 and the first radio communication interface 107 transmit the packet to the first base station 31.

In step S319, the first base station 31 transmits the packet to the application server 41 via the infrastructure network 1.

In step S320, the application server 41 transmits a packet to the first base station 31 via the infrastructure network 1.

In step S321, the first base station 31 transmits the packet to the first mobile communication terminal 11.

As has been described above in detail, according to the embodiment of the present invention, a preference route is selected in response to an attribute of a service, in a radio communication system where a plurality of routes to and from a base station of the infrastructure network 1 exist as the single-hop route R1 and the multi-hop route R2 Thereby, it is made possible to match characteristics of traffic quality required for the service and quality characteristics of any one of the single-hop route R1 and the multi-hop mute R2. Furthermore, by setting the multi-hop route R2 as the first preference route for a non-real-time-based service, communication congestion at the first base station 31 can be avoided, and a communication completion rate can be increased.

### (MODIFICATION)

The first mobile communication terminal 11 according to the above described embodiment is configured to implement communications by using a radio system of the single-hop route R1 and a radio system of the multi-hop route R2. That is, only one radio system is provided to each of the single-hop route R1 and the multi-hop route R2

As a modification of the embodiment of the present invention, a plurality of radio systems may exist in each of the single-hop route R1 and the multi-hop route R2. By configuring the example in this manner, a larger number of routes to the application server 41 are made available. Thus, it is made possible to exert an effect of dispersing a load imposed on a base station.

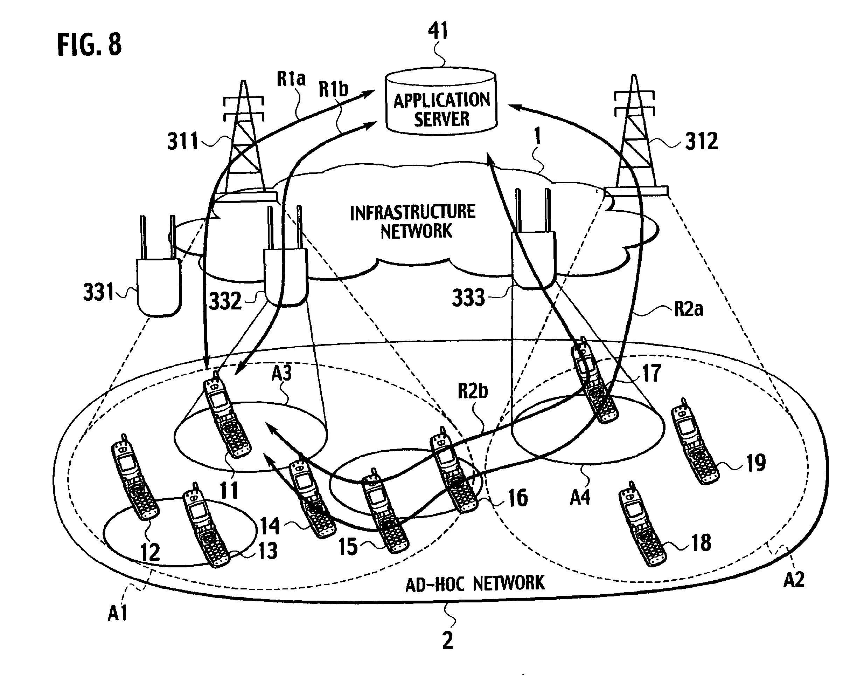

As shown in FIG. 8, radio communication system according to the modification of the embodiment of the present invention is different from the radio communication system in FIG. 1 in that the system of the modified example further includes third to fifth base stations 331 to 333 in addition to first and second base stations 311 and 312. The first and second base stations 311 and 312 are configured in conformity with a radio system different from a radio system with which the third to fifth base station 331 to 333 are configured in conformity.

Hereinafter, the radio system for the first and second base stations 311 and 312 will be referred to as a "first radio system," and the radio system for the third to fifth base stations 331 to 333 will be referred to as a "second radio system."

Each of the mobile communication terminals 11 to 19 is configured so as to be used with both of the first radio system and the second radio system. Accordingly, the first mobile communication terminal 11, for example which belongs to both of a cover area A1 of the first base station 311 and to a cover area A3 of the fourth base station 314, can select any one of the first base station 311 and the fourth base station 314 for communicating therewith.

Likewise, the seventh mobile communication terminal 17, which belongs to both of a cover area A2 of the second base station 312 and a cover area A4 of the fifth base station 333, can select any one of the second base station 312 and the fifth base station 333 for communicating therewith.

Consequently, as access routes of the first mobile communication terminal 11, the total of four routes exists. The four routes are: a single-hop route R1a using the first radio system; a single-hop route R1b using the second radio system; a multi-hop route R2a using the first radio system; and a. multi-hop route R2b using the second radio system.

In such a radio communication system, the above-described access route selector 102 substantiates processing for more sophisticated access route selection by selecting a combination of an access mute and a radio system of the access route.

As an example, supposing that the first radio system is better in quality characteristic than the second radio system, a preference order for an access route at the time of using a real-time-based service is established as "the single-hop route R1a using the first radio system > the single-hop route R1b using the second radio system > the muM-hop mute R2a using the first radio system > the multi-hop route R2b using the second radio system".

### (OTHER EMBODIMENTS)

The present invention has been described hereinabove by way of one embodiment. Meanwhile, it should not be understood that the statements and the drawings forming part of this disclosure limit the present invention. Various alternative embodiments, examples and operational technologies will be apparent to those skilled in the art from this disclosure.

In the above described embodiment, the described example is one where each of the mobile communication terminals 11 to 16 preferentially selects an, access route out of the single-hop route R1 and the multi-hop route R2, in accordance with a service attribute. However, each of the mobile communication terminals 11 to 16 maybe configured to preferentially select an access route out of the single-hop route R1 and the multi-hop route R2, in accordance with an application type indicating a type of an application.

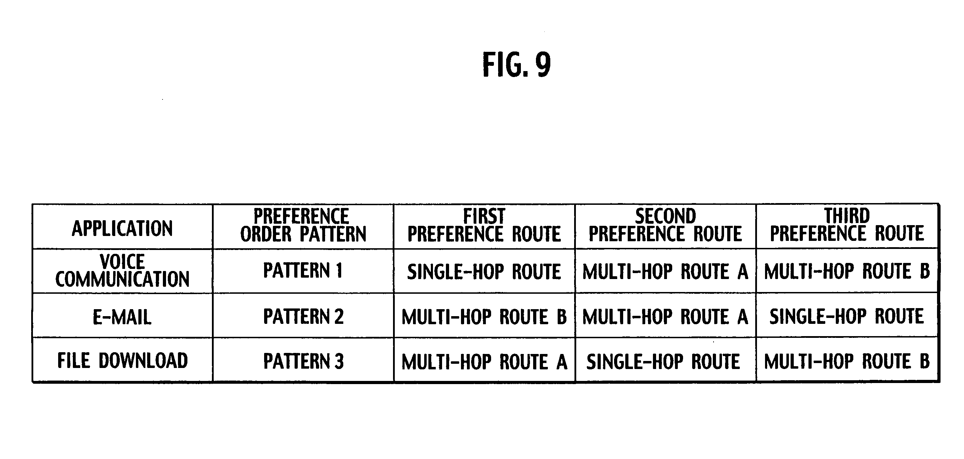

For example, as shown in FIG. 9, different preference order patterns are assigned respectively to application types of "voice communications," "e-mail" and "file download." By setting the different preference order patterns for the respective applications, detailed access route selection can be substantiated.

It should be understood that the present invention includes various embodiments and the like which are not herein described. Accordingly, the present invention should be limited only by invention specifications within the scope of claims, the invention specifications being appropriate based on this disclosure.

## Claims

1. A mobile communication terminal which communicates with a base station of an infrastructure network via any one of a. single-hop route, and a multi-hop route using other terminals, comprising:
an application processor configured to process an application involving communications with the base station; and
an access route selector configured to select an access route out of the single-hop route and the multi-hop mute, in accordance with information on the application.

2. The mobile communication terminal according to claim 1, wherein,
the access route selector preferentially selects the single-hop route when a service provided by the application has a service attribute requiring rcal-time processing, and
the access route selector preferentially selects the multi-hop route when a service provided by the application has a service attribute not requiring real-time processing.

3. The mobile communication terminal according to claim 1, wherein the access route selector selects an access route out of the single-hop route and the multi-hop route, in accordance with an application type indicating a type of the application.

4. The mobile communication terminal according to any one of claims 1 to 3, wherein the access route selector selects a combination of the access route and a radio system of the access route.

5. A route selection method for a mobile communication terminal which communicates with a base station of an infrastructure network via any one of a single-hop route, and a multi-hop route using other terminals, the method comprising the steps of
processing an application involving communications with the base station; and
selecting an access mute out of the single-hop route and the multi-hop route, in accordance with information on the application.
